# EUROPEAN PATENT APPLICATION

(11) **EP 1 657 130 A1**
(43) Date of publication of application: **17.05.2006**
(21) Application number: 04257085.3
(22) Date of filing: 16.11.2004
(51) Int. Cl.: B60T 8/40, F04B 53/10

(54) **Pump of an electronically controlled braking system**

(71) Applicant: Mando Corporation, Pyungtaek-si, Kyongki-do (KR)
(72) Inventor: Yang, I-Jin, Pyungteak-City Kyonggi-Do (KR)
(74) Representative: Pratt, David Martin

(57) **Abstract**

A pump (15L,15R) of an electronically-controlled brake system including a bore (25) formed in a modulator block (18) to communicate with inlet (23) and outlet (24) ports formed in the modulator block (18), a piston (30) connected to a spindle (21) of a motor (16) arranged at one end of the bore (25), and arranged in the bore (25) such that the piston (30) reciprocates in the bore (25), and a cover (50) coupled to the other end of the bore (25) to define a compression chamber (40) between the cover (50) and an end of the piston (30) facing the cover (50). The compression chamber (40) communicates with the outlet port (24). The pump (15L,15R) further includes an outlet valve (70) to open and close the outlet port (24) to allow oil in the compression chamber (40) to be discharged from the compression chamber (40), an inlet passage (51) formed in the cover (50) to transfer oil in the inlet port (23) to the compression chamber (40), and an inlet valve (60) arranged in the compression chamber (40) at an outlet of the inlet passage (51), and fixed to the cover (50) to open and close the inlet passage. The inlet valve (60) operates in opposite to the outlet valve (70). The inlet valve (60) has a valve opening/closing member (62) to selectively come into contact with a valve seat (61) provided at the cover (50). Since the inlet valve (60) is fixed to the cover (50), the valve opening/closing member (62) can be rapidly moved away from the valve seat (61) without being restrained by the piston (30). Accordingly, the filling rate of oil in the compression chamber (40) is enhanced.

## Description

### BACKGROUND OF THE INVENTION

### 1. Field of the Invention

The present invention relates to an electronically controlled brake system, and more particularly to a pump for forcibly pumping oil from a lower-pressure accumulator to a high-pressure accumulator.

### 2. Description of the Related Art

Generally, electronically controlled brake systems are used to efficiently prevent generation of a slippage phenomenon in a vehicle during a braking operation, quick start or sudden acceleration. Such an electronically controlled brake system includes a plurality of solenoid valves to control the pressure of brake oil transmitted to hydraulic brakes for wheels of a vehicle, a pair of low-pressure accumulators to temporarily store brake oil discharged from the hydraulic brakes, a pair of high-pressure accumulators, a pair of pumps each arranged between an associated one of the low-pressure accumulators and an associated one of the high-pressure accumulators, and driven by motors, respectively, and an electronic control unit (ECU) to control the solenoid valves and motors. These constituent elements are received in a modulator block made of aluminum.

Each pump forcibly pumps brake oil stored in a low-pressure state in an associated one of the low-pressure accumulators toward an associated one of the high-pressure accumulators so that the brake oil is transferred to an associated one of the hydraulic brakes or a master cylinder.

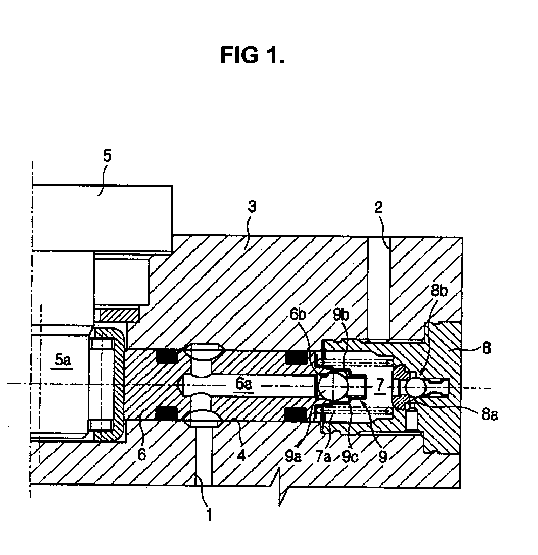

Referring to FIG. 1, a pump is illustrated which is used in the above-mentioned conventional electronically-controlled brake system. As shown in FIG. 1, the pump includes a bore 4 formed in a modulator block 3 such that the bore 4 is opened in a lateral direction of the modulator block 3 to communicate with an inlet port 1 connected to a low-pressure accumulator (not shown) and an outlet port 2 connected to a high-pressure accumulator (not shown). The pump also includes a piston 6 connected, at one end thereof, to an eccentric spindle 5a of a motor 5, and received in the bore 4 through one end of the bore 4 such that the piston 6 reciprocates rectilinearly in a longitudinal direction of the bore 4.

A cover 8 is fitted in the other end of the bore 4 to define a compression chamber 7 in the bore 4 between the cover 8 and the other end of the piston 6. The cover 8 is provided with an outlet passage 8a to communicate with the outlet port 2, and an outlet valve 8b to open and close the discharge passage 8a.

An inlet passage 6a is formed at the piston 6 to receive oil from the inlet port 1, and to discharge the received oil into the compression chamber 7. An inlet valve 9 is provided at the end of the piston 6 where an outlet of the inlet passage 6a is formed. The inlet valve 9 is operated in opposite to the outlet valve 8b to open and close the inlet passage 6a in accordance with a reciprocating movement of the piston 6.

The inlet valve 9 includes a ball member 9a made of metal and arranged to be in close contact with the outlet of the inlet passage 6a, a spring 9b to always urge the ball member 9a against the outlet of the inlet passage 6a, and a retainer 9c to receive the ball member 9a and spring 9b. A frustoconical valve seat 6b is formed at the end of the piston 6 corresponding to the outlet of the inlet passage 6a. The ball member 9a comes into contact with the valve seat 6b or is spaced apart from the valve seat 6b. A return spring 7a is arranged in the compression chamber 7 to always urge the piston 6 toward the motor 5, and thus, to return the piston 6, which has been moved to the cover 8, toward the motor 5. The retainer 9c is arranged between the return spring 7a and the end of the piston 6 facing the return spring 7a.

In the conventional pump having the above-mentioned configuration, the piston 6 is rectilinearly reciprocated when the eccentric spindle 5a of the motor 5 rotates, thereby causing the internal pressure of the compression chamber 7 in the bore 4 to vary. In response to the pressure variation, the inlet valve 9 and outlet valve 8b perform opening and closing operations in opposite manners, respectively. Thus, oil is introduced into the compression chamber 7 through the inlet port 1, and is discharged from the compression chamber 7 through the outlet port 2 after being compressed.

That is, when the piston 6 moves toward the cover 8, the oil pressure of the compression chamber 7 is increased, thereby causing the outlet valve 8b to be opened. Accordingly, the oil in the compression chamber 7 is pumped to the high-pressure accumulator (not shown) through the opened outlet port 2.

On the other hand, when the piston 6 moves toward the motor 5, the oil pressure of the compression chamber 7 is reduced to a negative level, so that the inlet valve 9 is opened, and the outlet valve 8b is closed. Accordingly, the oil in the low-pressure accumulator (not shown) is sucked into the compression chamber 7 through the inlet port 1 and inlet passage 6a to fill the compression chamber 7.

In the above-mentioned pump used in conventional electronically-controlled brake systems, however, there is a problem in that the filling rate of oil in the compression chamber 7 may be insufficient because the inlet valve 9 is arranged at the end of the piston 6 where the outlet of the inlet passage 6a is formed, to be reciprocated together with the piston 6, so that the ball member 9a cannot be rapidly moved away from the valve seat 6b.

That is, when the inlet valve 9 is opened in accordance with the movement of the piston 6 toward the motor 5, the internal pressure of the compression chamber 7 is reduced to a negative level, so that oil is sucked from the inlet passage 6a into the compression chamber 7. At this time, an inertial force effecting toward the motor 5 is applied to the ball member 9a, which moves together with the piston 6, so that the ball member 9a cannot be rapidly moved away from the valve seat 6b.

Furthermore, since the valve seat 6b of the inlet valve 9, on which the ball member 9a is to be selectively seated, has a frustoconical structure, the manufacture of the valve seat 6b cannot be easily achieved. In addition, the ball member 9a, which is made of metal to have a spherical shape, has a problem.

That is, since the ball member 9a has a spherical structure, the area of the ball member 9a contacting oil, that is, fluid, is relatively larger than that of a planar structure. Furthermore, the fluid acting on the ball member 9a is guided by the round outer surface of the ball member 9a to flow along the round outer surface of the ball member 9a in a bypassing manner without being concentrated on the ball member 9a. For this reason, the ball member 9a cannot be easily moved away from the valve seat 6b due to the fluid tending to flow toward the outlet of the inlet passage 6a. Moreover, residual magnetic force exists between the valve seat 6b and the ball member 9a during the opening operation of the inlet valve 9 because both the ball member 9a and the piston 6 providing the valve seat 6b are made of metal. Due to this residual magnetic force, the movement of the ball member 9a away from the valve seat 6b is further difficult. The difficulty of the ball member 9a in moving away from the valve seat 6b causes the inlet valve 9 to be inadequately opened. As a result, the filling rate of oil in the compression chamber 7 during the opening operation of the inlet valve 9 may be insufficient, so that the oil discharge efficiency of the pump may be degraded.

### SUMMARY OF THE INVENTION

The present invention has been made in view of the above-mentioned problems, and an aspect of the invention is to provide a pump of an electronically-controlled brake system in which an inlet valve is smoothly opened, so that the filling rate of oil in a compression chamber is increased.

In accordance with one aspect, the present invention provides a pump of an electronically controlled brake system comprising a modulator block, a bore formed in the modulator block to communicate with inlet and outlet ports formed in the modulator block, a piston connected to a spindle of a motor arranged at one end of the bore, the piston is arranged in the bore such that the piston reciprocates in the bore, a cover coupled to the other end of the bore to define a compression chamber between the cover and an end of the piston facing the cover, and a return spring arranged in the compression chamber to always urge the piston toward the motor, wherein the compression chamber communicates with the outlet port, and wherein the pump further comprises: an outlet valve arranged at the outlet port to open and close the outlet port to allow oil in the compression chamber to be discharged from the compression chamber through the outlet port in an opened state of the outlet port; an inlet passage formed in the cover to transfer oil in the inlet port to the compression chamber; and an inlet valve arranged in the compression chamber at an outlet of the inlet passage, and fixed to the cover to open and close the inlet passage, the inlet valve operating in opposite to the outlet valve.

The inlet valve may comprise an annular valve seat provided at the outlet of the inlet passage, a disc-shaped valve opening/closing member arranged to be movable between a first position, at which the valve opening/closing member comes into contact with the valve seat and a second position, at which the valve opening/closing member is spaced apart from the valve seat, an elastic member to always urge the valve opening/closing member toward the valve seat, and a retainer fixed to the cover to receive the valve opening/closing member and the elastic member.

The cover may be provided with an annular extension extending from a surface of the cover facing the compression chamber between the compression chamber and the modulator block. The retainer may be tightly fitted in the extension.

The valve seat may be protruded from the cover toward the valve opening/closing member. The valve opening/closing member may have a planar surface to come into contact with the valve seat when the valve opening/closing member moves to the first position.

The valve seat may be integral with the cover.

The valve seat may be provided at a separate seat member coupled to the cover. The valve seat may be made of a plastic material.

The inlet valve may comprise a disc-shaped valve opening/closing member, and an annular valve seat integral with the valve opening/closing member. The annular valve seat may be protruded from an end of the valve opening/closing member to be movable between a first position, at which the valve seat comes into contact with the cover and a second position, at which the valve seat is spaced apart from the cover.

The valve opening/closing member may be made of a plastic material.

The inlet passage may comprise a main oil passage to communicate with the compression chamber, and a plurality of auxiliary oil passages to communicate with the inlet port.

The outlet valve may comprise a check valve to open the outlet port only when the piston moves toward the cover.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a sectional view illustrating the configuration of a pump used in a conventional electronically-controlled brake system;
FIG. 2 is a hydraulic circuit diagram of an anti-lock brake system, to which the present invention is applied;
FIG. 3 is a sectional view illustrating the configuration of a pump of an electronically-controlled brake system according to an embodiment of the present invention.
FIG. 4 is an enlarged sectional view illustrating a part of the pump shown in FIG. 3;
FIG. 5 is an enlarged sectional view illustrating a part of a pump of an electronically-controlled brake system according to another embodiment of the present invention; and

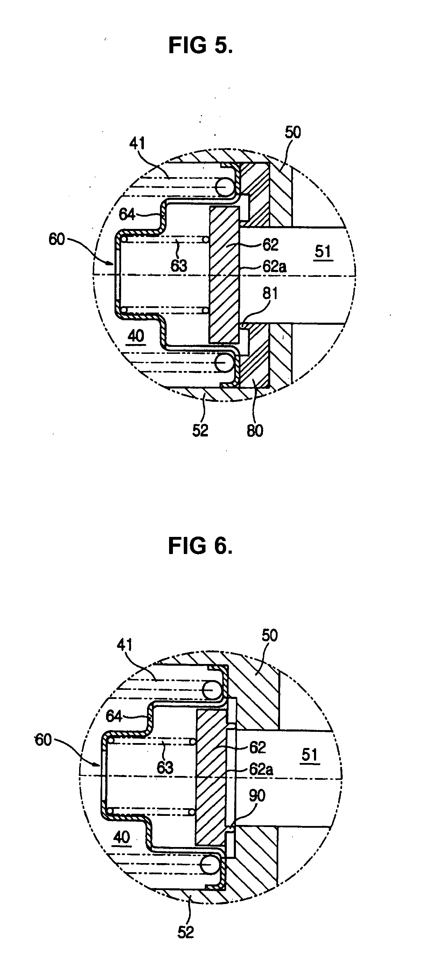

FIG. 5 is an enlarged sectional view illustrating a part of a pump of an electronically-controlled brake system according to another embodiment of the present invention.

### DETAILED DESCRIPTION OF THE PREFERRED EMBODIMENTS

Reference will now be made in detail to the embodiments of the present invention, examples of which are illustrated in the accompanying drawings. The embodiments are described below to explain the present invention by referring to the figures.

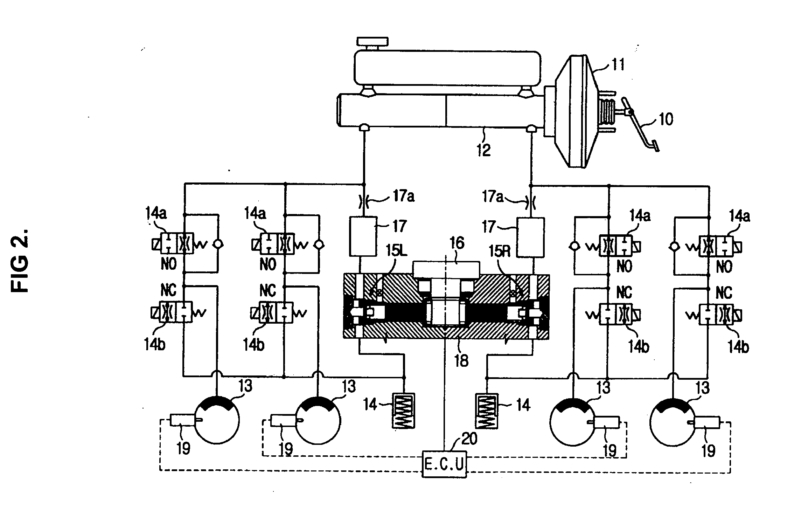

Referring to FIG. 2, a pump according to an embodiment of the present invention is illustrated which is included in an electronically-controlled brake system applied to an anti-lock brake system to prevent slippage of wheels during a braking operation of the electronically-controlled brake system.

As shown in FIG. 2, the anti-lock brake device, to which the present invention is applied, includes a servo unit 11 and a master cylinder, which are operatively connected to a brake pedal 10 to generate a hydraulic braking pressure. The anti-lock brake device also includes a plurality of solenoid valves (in the illustrated case, two groups of solenoid valves 14a and 14b) to control hydraulic braking pressures respectively transmitted to hydraulic brakes 13 mounted to front and rear wheels, low-pressure accumulators 14 to temporarily store oil discharged from the hydraulic brakes 13 during a pressure-reduced braking operation, a pair of pumps 15L and 15R to pump the oil stored in the low-pressure accumulator 14 during a pressure-increased or pressure-maintained braking operation, a motor 16 to simultaneously drive the pumps 15L and 15R, and high-pressure accumulators 17 each including an orifice 17a arranged at an outlet of the high-pressure accumulator 17 to reduce pressure pulsation of oil discharged under pressure in accordance with operation of an associated one of the pumps 15L and 15R. The above-described constituent elements are received in a modulator block 18 made of aluminum.

Each of the solenoid valves 14a and 14b includes a normally-opened (NO) solenoid valve 14a operatively connected to an upstream side of an associated one of the hydraulic brakes 13, and maintained to be opened in a normal state, and a normally-closed (NC) solenoid valve 14b operatively connected to a downstream side of the associated hydraulic brake 13, and maintained to be closed in a normal state. Opening and closing operations of the solenoid valves 14a and 14b are controlled by an ECU 20 to detect a vehicle speed through wheel sensors 19 arranged at the front and rear wheels, respectively. When each NC solenoid valve 14b is opened in accordance with a pressure-reduced braking operation, oil is discharged from an associated one of the hydraulic brakes 13, and then temporarily stored in an associated low-pressure accumulator 14.

The pumps 15L and 15R are driven by the single motor 16 under the condition in which there is a predetermined phase difference between the pumps 15L and 15R. In accordance with operation of each pump 15L or 15R, oil stored in the associated low-pressure accumulator 14 is pressurized, so that the pressurized oil is pumped to the associated high-pressure accumulator 17.

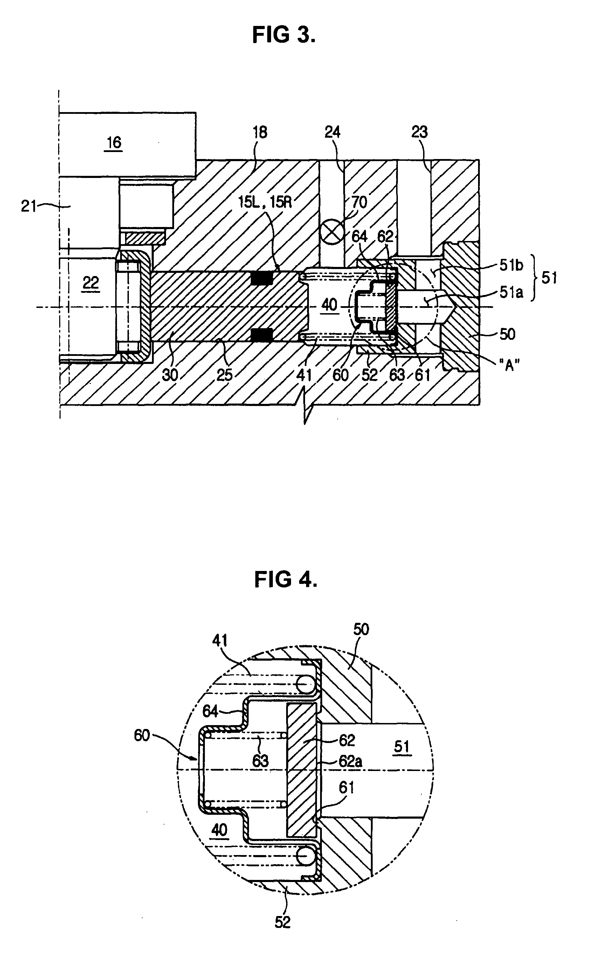

The structure of such a pump is concretely shown in FIG. 3. For reference, the pumps 15L and 15R are symmetrically arranged at opposite sides of the motor 16, and have the same structure. In the following description, the structures of the pumps 15L and 15R will be described in conjunction with only one of the pumps 15L and 15R for simplicity of description, if necessary. In this case, the pump to be described will be designated by reference numeral 15.

The motor 16 is installed in a central portion of the modulator block 18, and includes a pair of spindles 21 extending in opposite lateral directions to drive the pumps 15L and 15R, respectively. Eccentric shafts 22 are provided at respective free ends of the spindles 21 of the motor 16. The eccentric shafts 22 are connected to respective pistons 30 of the pumps 15L and 15R to drive the pumps 15L and 15R at a phase difference of 180°.

The pump 15 includes a bore 25 formed in a modulator block 3 such that the bore 4 is opened in a lateral direction of the modulator block 3 to communicate with an inlet port 23 connected to the low-pressure accumulator 14 and an outlet port 24 connected to the high-pressure accumulator 17. The spindle 21 of the motor 16 is arranged at one end of the bore 25. The piston 30 is arranged in the bore 25, and is connected to the spindle 21 of the motor 16 such that the piston 30 reciprocates in a longitudinal direction of the bore 25 in accordance with operation of the motor 16. A cover 50 is coupled to an opened end of the bore 25 opposite to the motor 16 to define a compression chamber 40 in the bore 25 between the cover 50 and an end of the piston 30 facing the cover 50. A return spring 41 is arranged in the compression chamber 40 to always urge the piston 30 toward the motor 16, and thus, to return the piston 6, which has been moved to the cover 50, toward the motor 16.

An inlet passage 51 is formed at the cover 50 to communicate with the inlet port 23. The compression chamber 40 communicates with the outlet port 24. An inlet valve 60 and an outlet valve 70 are provided at the compression chamber 40 and the outlet port 24, respectively. The inlet valve 60 and outlet valve 70 operate in opposite manners in accordance with a reciprocating movement of the piston 30 to open/close the inlet passage 51 and outlet port 24, respectively.

The outlet valve 70, which is arranged at the outlet port 24, allows oil in the compression chamber 40 to flow toward the outlet port 24, while preventing oil in the outlet port 24 from flowing backward into the compression chamber 40. The outlet valve 70 has a general check valve function to open the outlet port 24 only when the piston 30 moves toward the cover 50.

The inlet passage 51 is provided at the cover 50 to allow oil from the inlet port 23 to be introduced into the cover 50, and thus, to be supplied into the compression chamber 40. In order to more effectively achieve the supply of oil into the compression chamber 40, the inlet passage 51 includes a main oil passage 51a formed at a central portion of the cover 50 to extend in a longitudinal direction of the cover 50 such that the oil passage 51a communicates with the compression chamber 40, and a plurality of auxiliary oil passages 51 b provided at the cover 50 around the main oil passage 51 a to communicate with the inlet port 23.

Also, the inlet valve 60, which opens and closes the inlet passage 51, includes an annular valve seat 61 provided at an end of the cover 50 corresponding to an outlet of the inlet passage 51, a valve opening/closing member 62 arranged to be movable between a position, at which the valve opening/closing member 62 comes into contact with the valve seat 61 and a position, at which the valve opening/closing member 62 is spaced apart from the valve seat 61, an elastic member 63 to always urge the valve opening/closing member 62 toward the valve seat 61, and a retainer 64 provided at the cover 50 to retain the valve opening/closing member 62 and elastic member 63.

In order to fix the retainer 64, an annular extension 52 extends from an end of the cover 50 facing the compression chamber 40 between the compression chamber 40 and the modulator block 18. The retainer 64 is tightly fitted in the annular extension 52. The inlet valve 60 is fixed in position in the compression chamber 40 by the retainer 64 fitted in the annular extension 52.

Since the inlet valve 60 is fixed in the compression chamber 40 in accordance with the above-described structure, the inlet valve 60 does not move together with the piston 30. Thus, the operation of the valve opening/closing member 62 is not restrained by movement of the piston 30. Accordingly, the valve opening/closing member 62 can be more easily moved away from the valve seat 61.

That is, when the internal pressure of the compression chamber 40 is reduced in accordance with movement of the piston 30 toward the motor 16, the elastic member 63 is compressed by the pressure of oil in the inlet passage 51. As a result, the valve opening/closing member 62 is moved toward the piston 30 in the retainer 64, thereby opening the inlet passage 51. In this case, the movement of the valve opening/closing member 62 is rapidly carried out without being restrained by the movement of the piston 30. Accordingly, the oil in the inlet passage 51 is more rapidly introduced into the compression chamber 40 to fill the compression chamber 40.

When the piston 30 of the pump 15 moves toward the cover 50, the inlet valve 60 is closed. Simultaneously, the outlet valve 70 is closed in accordance with an operation thereof carried out in opposite to the operation of the inlet valve 60. Accordingly, the oil in the compression chamber 40 is pumped into the high-pressure accumulator 17 through the outlet port 24. On the other hand, when the piston 30 moves toward the motor 16, the outlet valve 90 is closed. Simultaneously, the inlet valve 60 is opened. Accordingly, oil in the low-pressure accumulator 14 is introduced into the compression chamber 40 via the inlet port 23 and inlet passage 51 to fill the compression chamber 40.

The valve seat 61 of the inlet valve 60 is protruded from the end of the cover 50 corresponding to the outlet of the inlet passage 51 to have an annular structure integral with the cover 50. As shown in an enlarged state in FIG. 4, the valve seat 61 has an annular structure, as compared to a frustoconical structure used in conventional cases. Accordingly, the manufacture of the valve seat 61 can be easily achieved. Also, the area of the valve opening/closing member 62 contacting the valve seat 61 is reduced, so that the valve opening/closing member 62 can be easily moved away from the valve seat 61. Although the valve seat 61 is protruded from the cover 50 in the illustrated embodiment of the present invention, the valve seat 61 may be formed by recessing a portion of the cover 50 around a region where the valve seat 61 is to be provided.

The valve opening/closing member 62, which is arranged to be movable between the position, at which the valve opening/closing member 62 comes into contact with the valve seat 61 and the position, at which the valve opening/closing member 62 is spaced apart from the valve seat 61, has a disc-shaped structure. The valve opening/closing member 62 is provided with a planar opening/closing surface 62a facing the cover 50, to selectively come into contact with the valve seat 61. In accordance with the disc-shaped structure of the valve opening/closing member 61 provided with the planar contact surface 62a, oil, which tends to flow from the inlet passage 51 into the compression chamber 40 when the inlet valve 60 is opened, is concentrated on the valve opening/closing member 62. In this case, the area of the valve opening/closing member 62 contacting the oil is also reduced. Accordingly, the valve opening/closing member 62 is rapidly moved away from the valve seat 61, so that the inlet valve 60 is easily opened.

The valve opening/closing member 62 is injection-molded using a plastic material. Accordingly, no magnetic force is generated between the valve opening/closing member 62 and the valve seat 61 formed at the cover 50, which is made of metal. As a result, no residual magnetic force exists between the valve seat 61 and the valve opening/closing member 62 when the valve opening/closing member 62 is moved away from the valve seat 61. Also, the weight of the valve opening/closing member 62 is reduced, so that the inertial force of the valve opening/closing member 62 is reduced. Accordingly, when the valve opening/closing member 62 moves away from the valve seat 61 immediately after the valve opening/closing member 62 has moved toward the cover 50, this movement can be easily achieved.

Meanwhile, FIG. 5 illustrates a pump according to another embodiment of the present invention. As shown in FIG. 5, a valve seat 81 is provided at a separate seat member 80 coupled to the cover 50 in accordance with this embodiment of the present invention. The seat member 80 is tightly fitted in the annular extension 52 between the retainer 64 and the cover 50. The seat member 80 is formed using a plastic material such that the valve seat 81 is formed integrally with the seat member 80. Accordingly, the formation of the valve seat 81 can be more easily achieved.

Another embodiment of the present invention is illustrated in FIG. 6. As shown in FIG. 6, the valve seat 90 is annularly protruded from the opening/closing surface 62a of the valve opening/closing member 62 such that the valve seat 90 comes into contact with a portion of the cover 50 around the outlet of the inlet passage 51 or is spaced apart from the cover portion. The valve seat 90 is integral with the valve opening/closing member 62. Similarly to the above-described cases, the valve opening/closing member 62 in this case is made of a plastic material. Accordingly, the formation of the valve seat 90 can be easily achieved. Also, the inertial force of the valve opening/closing member 62 is reduced. Thus, the opening of the inlet valve 60 can be easily achieved.

Operations of the pumps in the electronically-controlled brake system, which is applied an anti-lock brake system, and functions and effects according to the pump operations will now be described. Although the pumps according to the above-described embodiments of the present invention are slightly different in terms of structure, the operations of the pumps are carried out in the same fashion. Accordingly, the following description will be given in conjunction with only the operation of the pump according to the first embodiment of the present invention illustrated in FIGS. 3 and 4.

The anti-lock brake system controls braking pressure in three modes, that is, a pressure reducing mode, a pressure increasing mode, and a pressure maintaining mode, to prevent slippage of the vehicle. The solenoid valves 14a and 14b repeatedly perform opening and closing operations to control transmission of hydraulic pressure to the hydraulic brakes 13 in accordance with operations of the pumps 15L and 15R. When the driver presses the brake pedal 10, a braking force is generated by a hydraulic braking pressure established in each hydraulic brake 13 through the servo device 11 and master cylinder 12. When the braking pressure in each hydraulic brake 13 is excessively high, as compared to the ground condition, it is necessary to reduce the braking force to an appropriate level. In this case, the ECU 20 controls each NO solenoid valve 14a to be closed, and controls each NC solenoid valve 14b to be opened.

On the other hand, when the braking pressure control mode is maintained in the pressure reducing mode for a prolonged period of time, or when the vehicle moves to an area where the frictional coefficient of the ground is high, the friction generated between the ties of the vehicle and the ground increases, thereby causing a degradation in braking efficiency. Such a situation is detected by the ECU 20, based on a signal transmitted from each wheel sensor 19 to the ECU 20. Upon detecting the situation, the ECU 20 controls the motor 16 to drive the pumps 15L and 15R, and thus, to increase the braking pressure in each hydraulic brake 13. That is, oil stored in each low-pressure accumulator 14 is supplied under pressure to the associated high-pressure accumulator 17. Subsequently, supply of electric power to each NO solenoid valve 14a is cut off, thereby causing the NO solenoid valve 14a to be opened. As a result, oil from each high-pressure accumulator 17 is supplied into the associated hydraulic brake 10 through the associated, opened NO solenoid valve 14a, so that the hydraulic braking pressure in the hydraulic brake 13 is increased.

The oil stored in each low-pressure accumulator 14 is pressurized in accordance with the driving of an associated one of the pumps 15L and 15R during the braking operation in the pressure-increasing mode, so that the pressurized oil is supplied into the associated NO solenoid valve 14a via the associated high-pressure accumulator 17 and associated orifice 17a. In this case, each of the pumps 15L and 15R operate in the following manner.

That is, when the eccentric spindle 21 of the motor 16 rotates, the piston 30 in the bore 25 is moved toward the cover 50, thereby increasing the oil pressure in the compression chamber 40. As a result, the valve opening/closing member 62 comes into contact with the valve seat 61. In accordance with such an operation of the inlet valve 60, the inlet passage 51 is closed. Accordingly, the outlet valve 70 is opened due to the increased oil pressure in the compression chamber 40, thereby causing the oil in the compression chamber 40 to be discharged into the high-pressure accumulator 17 through the outlet port 24.

On the other hand, when the piston 30 is moved toward the motor 16 by the resilience of the return spring 41 such that the oil pressure in the compression chamber 40 is reduced, the valve opening/closing member 62 is moved away from the valve seat 61 by the pressure of oil from the inlet passage 51. Thus, the inlet valve 60 opens the inlet passage 51. At this time, the outlet valve 70, which operates in opposite to the inlet valve 60, closes the outlet port 24. As a result, the oil in the low-pressure accumulator 14 is introduced into the compression chamber 40 through the inlet port 23 and inlet passage 51 to fill the compression chamber 40.

Since the inlet valve 60 is fixedly mounted to the cover 50, the inlet valve 60 is maintained in a fixed state in the compression chamber 40 without being restrained by the reciprocating movement of the piston 30. Accordingly, the valve opening/closing member 62 can be rapidly moved away from the valve seat 61. Thus, the filling rate of oil in the compression chamber 40 is enhanced.

Also, the valve opening/closing member 62 has the planar opening/closing surface 62 facing the valve seat 61 to reduce the area of the valve opening/closing member 62 contacting the inlet passage 51 and to concentrate the oil supplied from the inlet passage 51 on only the opening/closing surface 62. Accordingly, the opening operation of the valve opening/closing member 62 can be more easily achieved.

Since the inlet valve 60 is configured such that the valve opening/closing member 62 is rapidly moved away from the valve seat 61, as described above, the opening operation performance of the inlet valve 60 is improved. Accordingly, oil from the inlet port is rapidly filled in the compression chamber 40.

As apparent from the above description, in the pump of the electronically-controlled brake system according to the present invention, the inlet valve is fixed in the compression chamber such that the operation of the inlet valve to open and close the inlet passage is not restrained by the reciprocating movement of the piston. Accordingly, the valve opening/closing member is rapidly moved away from the valve seat. Thus, there is an advantage in that the opening operation performance of the inlet valve is improved to achieve an enhancement in the filling rate of oil in the compression chamber.

Although a few embodiments of the present general inventive concept have been shown and described, it will be appreciated by those skilled in the art that changes may be made in these embodiments without departing from the principles and spirit of the invention, the scope of which is defined in the appended claims and their equivalents.

## Claims

1. A pump of an electronically controlled brake system comprising a modulator block, a bore formed in the modulator block to communicate with inlet and outlet ports formed in the modulator block, a piston connected to a spindle of a motor arranged at one end of the bore, the piston is arranged in the bore such that the piston reciprocates in the bore, a cover coupled to the other end of the bore to define a compression chamber between the cover and an end of the piston facing the cover, and a return spring arranged in the compression chamber to always urge the piston toward the motor,
wherein the compression chamber communicates with the outlet port, and
wherein the pump further comprises:
an outlet valve arranged at the outlet port to open and close the outlet port to allow oil in the compression chamber to be discharged from the compression chamber through the outlet port in an opened state of the outlet port;
an inlet passage formed in the cover to transfer oil in the inlet port to the compression chamber; and
an inlet valve arranged in the compression chamber at an outlet of the inlet passage, and fixed to the cover to open and close the inlet passage, the inlet valve operating in opposite to the outlet valve.

2. The pump according to claim 1, wherein the inlet valve comprises:
an annular valve seat provided at the outlet of the inlet passage;
a disc-shaped valve opening/closing member arranged to be movable between a first position, at which the valve opening/closing member comes into contact with the valve seat and a second position, at which the valve opening/closing member is spaced apart from the valve seat;
an elastic member to always urge the valve opening/closing member toward the valve seat; and
a retainer fixed to the cover to receive the valve opening/closing member and the elastic member.

3. The pump according to claim 2, wherein:
the cover is provided with an annular extension extending from a surface of the cover facing the compression chamber between the compression chamber and the modulator block; and
the retainer is tightly fitted in the extension.

4. The pump according to claim 2, wherein:
the valve seat is protruded from the cover toward the valve opening/closing member; and
the valve opening/closing member has a planar surface to come into contact with the valve seat when the valve opening/closing member moves to the first position.

5. The pump according to claim 2, wherein the valve seat is integral with the cover.

6. The pump according to claim 2, wherein the valve seat is provided at a separate seat member coupled to the cover.

7. The pump according to claim 6, wherein the valve seat is made of a plastic material.

8. The pump according to claim 1, wherein the inlet valve comprises:
a disc-shaped valve opening/closing member; and
an annular valve seat integral with the valve opening/closing member, the annular valve seat being protruded from an end of the valve opening/closing member to be movable between a first position, at which the valve seat comes into contact with the cover and a second position, at which the valve seat is spaced apart from the cover.

9. The pump according to claim 2 or 8, wherein the valve opening/closing member is made of a plastic material.

10. The pump according to claim 1, wherein the inlet passage comprises:
a main oil passage to communicate with the compression chamber; and
a plurality of auxiliary oil passages to communicate with the inlet port.

11. The pump according to claim 1, wherein the outlet valve comprises a check valve to open the outlet port only when the piston moves toward the cover.
